# EUROPÄISCHE PATENTANMELDUNG

(11) **EP 3 902 056 A2**
(43) Veröffentlichungstag der Anmeldung: **27.10.2021**
(21) Anmeldenummer: 21168512.8
(22) Anmeldetag: 15.04.2021
(51) Int. Cl.: H01M 50/227, H01M 50/236, H01M 50/238, H01M 50/24

(54) **SCHUTZHÜLLE FÜR EINE SPEICHEREINRICHTUNG UND VERWENDUNG DERSELBEN**

(30) Priorität: 21.04.2020 DE 202020102191 U
(71) Anmelder: Kress, Markus, 89075 Ulm (DE)
(72) Erfinder: Kress, Markus, 89075 Ulm (DE)
(74) Vertreter: Sawodny, Michael-Wolfgang

(57) **Zusammenfassung**

Schutzhülle für eine elektrische Speichereinrichtung, insbesondere einen Akkumulator mit einem Überzug bzw. einer umlaufenden Wand, der die elektrische Speichereinrichtung, insbesondere den Akkumulator umschließt. Die Erfindung ist dadurch gekennzeichnet, dass der Überzug bzw. die umlaufende Wand bevorzugt einstückig, aus einem gummielastischen, insbesondere einem transparenten gummielastischen Material besteht und eine Dichtlippe, insbesondere eine flexible Dichtlippe, umfasst.

## Beschreibung

Die Erfindung betrifft eine Schutzhülle für eine elektrische Speichereinrichtung, insbesondere einen Akkumulator mit einem Überzug, der die Speichereinrichtung, insbesondere den Akkumulator, umschließt sowie eine Verwendung einer derartigen Schutzhülle.

Die ständige Weiterentwicklung im Bereich von elektrischen Speichereinrichtungen, insbesondere Akkumulatoren, führen zu einem sehr stetigen Wachstum von mobilen Elektrogeräten, bspw. im Bereich von Haus und Garten. Derzeit werden Geräte, die im Haus und Garten Verwendung finden, mit einer individuellen Akkumulatorentechnologie und Geräteschnittstellen ausgestattet. Allerdings wird im Bereich der im Haus und Garten verwendeten Geräte versucht, elektrische Speichereinrichtungen universell einzusetzen. Bei den bisher verwandten elektrischen Speichereinrichtungen ist es allerdings so, dass diese meist mit vom Hersteller abhängigen Gehäusen umgeben waren, die wiederum nicht gegen das Eindringen von Wasser, insbesondere vor Spritzwasser geschützt waren.

Ganz besondere Probleme ergeben sich insbesondere bei wasserführenden Geräten bspw. elektrische Pumpen, die mit einer elektrischen Speichereinrichtung anstelle eines festen Anschlusses versehen sind. Bei derartigen Geräten ist es notwendig die Speichereinrichtung gegen eindringendes Wasser, insbesondere auch im Betrieb zu schützen. Um dies zu gewährleisten ist es im Stand der Technik so, dass die Speichereinrichtung, insbesondere der Akkumulator, im Gehäuse des Geräts über eine Klappe entnehmbar eingesetzt wird. Um für verschiedene Größen der Speichereinrichtungen kompatibel zu sein, ist es notwendig, dass der Schacht im Gehäuse des im Haus oder Garten eingesetzten Gerätes so groß ausgebildet ist, dass er an verschiedene Größen der Speichereinrichtungen, insbesondere des Akkumulators angepasst werden kann. Für elektrische Speichereinrichtungen sind auch Schutzgehäuse bekannt geworden, die als Hartschale eine elektrische Speichereinrichtung wasserdicht umschließen, bspw. werden für elektrische Speichereinrichtungen für Fahrräder auch Textilmaterialien mit einer Schaumeinlage eingesetzt.

Aufgabe der Erfindung ist es, eine Schutzhülle zur Verfügung zu stellen, die zum einen sehr leicht an unterschiedliche elektrische Speichereinrichtungen, insbesondere Akkumulatoren, angepasst werden kann und andererseits die Speichereinrichtung sicher gegen das Eindringen von Wasser, insbesondere auch vor Spritzwasser schützt.

Erfindungsgemäß wird diese Aufgabe in einer ersten Ausgestaltung durch eine Schutzhülle gemäß Anspruch 1 und in einer alternativen Ausgestaltung durch eine Schutzhülle gemäß Anspruch 8 für eine elektrische Speichereinrichtung gelöst.

Die Erfindung zeichnet sich in einer ersten Ausgestaltung dadurch aus, dass der Überzug der die Speichereinrichtung, insbesondere den Akkumulator umschließt, aus einem gummielastischen Material, insbesondere einem transparenten gummielastischen Material besteht sowie eine Dichtlippe, insbesondere eine flexible Dichtlippe umfasst. Die Verwendung eines gummielastischen Materials erlaubt es, die Schutzhülle an die elektrische Speichereinrichtung anzupassen und die elektrische Speichereinrichtung eng anliegend zu umschließen.

Durch eine Dichtlippe, insbesondere eine flexible, bevorzugt um den gummielastischen Überzug, voll umfänglich umlaufende flexible Lippe, wird gewährleistet, dass die von der Schutzhülle umschlossene Speichereinrichtung gegen das Eindringen von Wasser, insbesondere Spritzwasser sicher geschützt ist. Dies ist unter anderem darauf zurückzuführen, dass die umlaufende flexible Lippe sich der Gehäusekontur des anschließenden Gehäuses, in dem die mit Strom zu versorgenden Einrichtungen angeordnet sind, anpasst.

In einer besonders bevorzugten Ausführungsform ist vorgesehen, dass das gummielastische Material eines der nachfolgenden Materialien
- Naturkautschuk,
- elastischer Thermoplast,
- Silikonkautschuk
ist.

Besonders bevorzugt ist die Verwendung von Silikonkautschuk als Material der Schutzhülle aufgrund seiner mechanischen und chemischen Eigenschaften Insbesondere ist Silikonkautschuk unempfindlich gegen Hitze, Ozon und alterungs- und chemikalienbeständig. Zwischen - 60 °C und 180 °C bleiben die mechanischen Eigenschaften des Silikonkautschuk des Weiteren unverändert. Besonders vorteilhaft bei der Verwendung von Silikonkautschuk ist die hohe Elastizität. Zudem weist Silikonkautschuk gute Isoliereigenschaften auf.

Ganz besonders bevorzugt ist es, wenn das Material, insbesondere das gummielastische Material einen Härtegrad zwischen 40 und 80 Shore A, insbesondere 45 und 55 Shore A aufweist. Derart ausgewählte Materialien mit den angegebenen Härtegraden sind insbesondere in Bezug auf die Abdichtung zum Gehäuse durch die Dichtlippe vorteilhaft, da sie bei den angegebenen Werten eine hohe Flexibilität der Dichtlippe einerseits zur Verfügung stellen, zum anderen eine ausreichende Formfestigkeit zur Abdichtung zum Gehäuse des im Haus oder Garten eingesetzten Elektrogerätes. Besonders optimal im Bezug auf ein Spritzwasserschutz sind Härten von ungefähr 50 Shore A aufgrund der Flexibilität und Formfestigkeit.

Um die Lage an die Gehäusekontur des Gehäuses des im Haus und/oder Garten eingesetzten Gerätes anzupassen, bei gleichzeitig optimalen Spritzwasserschutz, ist vorgesehen die Dichtlippe mit doppelt umlaufender Kante auszustatten. Hierdurch kann der Schutz gegen Eindringen des Wassers von außen nochmals erhöht werden. Bei einer Dichtlippe mit doppelt umlaufender Kante ist es vorteilhaft, wenn die Dichtlippen gegen unterschiedliche Gehäusekanten abdichtet, die insbesondere nahezu orthogonal zueinander stehen. Bei doppelten Dichtlippen liegt die innere Dichtlippe bzw. Kante bspw. direkt an der Gehäusefläche an und die äußere Dichtlippe bzw. Kante an einer fast vollständig umlaufenden Rippe. Die Rippe verläuft bevorzugt nahezu rechtwinklig zu der Gehäusekante. Im Falle einer nicht korrekt sitzenden Hülle, bei der eine Dichtlippe bzw. Kante nicht an dem Gehäuse anliegt, dichtet bei einer Dichtlippe mit doppelt umlaufende Kante die andere Lippe bzw. Kante ab und schützt das Gerät vor eindringender Feuchtigkeit.

Um die Speichereinrichtung bspw. über eine Kontaktplatte an das zu versorgende Elektrogerät anbinden zu können, ist vorgesehen, dass der Überzug im Bereich der Kontaktplatte eine Öffnung aufweist.

In einer alternativen Ausgestaltung der Erfindung ist vorgesehen, dass die Schutzhülle wenigstens zweistückig ausgebildet ist, umfassend eine obere Schutzhülle, insbesondere eine obere Schale und eine untere Schutzhülle, insbesondere eine untere Schale.

In einer besonderen Ausgestaltung der Erfindung ist die obere Schutzhülle, insbesondere die obere Schale ein formstabiler Kunststoff, insbesondere beispielsweise ein Acrylnitril-Butadien-Styrol-Copolymer (ABS) und die untere Schutzhülle, insbesondere die untere Schale, der bevorzugt auch als Deckel bezeichnet wird und aus einem weicheren Kunststoff, insbesondere einem Polypropylen (PP) oder Polyethylen (PE) besteht. Um die obere Schale leicht mit der unteren Schale verbinden zu können, ist vorgesehen, dass die obere Schutzhülle, insbesondere obere Schale bevorzugt eine umlaufende Nut und die untere Schale einen umlaufenden Wulst umfasst, der in die Nut einrastet. Eine ausreichende Abdichtung der von der Schutzhülle umschlossenen Speichereinrichtung wird dadurch erreicht, dass die obere Schutzhülle, insbesondere obere Schale eine umlaufende, flexible Kante umfasst.

Die Speichereinrichtung wird bevorzugt in die obere Schale eingesetzt und dort verriegelt. Eine Entriegelung und damit eine Entnahme der Speichereinrichtung ist sehr einfach möglich. Hierzu kann eine Entriegelungstaste bevorzugt aus einem gummielastischen Material in der oberen Schale betätigt werden.

Erfindungsgemäß ist es besonders bevorzugt, wenn auf Grund der Flexibilität des Materials die Schutzhülle an die Kontur der Speichereinrichtung angepasst ist und dadurch die Speichereinrichtung eng anliegend umschließt. Durch die eng anliegende Schutzhülle ist gewährleistet, dass kein Wasser zwischen Schutzhülle und Speichereinrichtung eindringen kann, wenn z.B. die Speichereinrichtung entnommen wird oder eine nicht an das Gerät angeschlossene Speichereinrichtung mit Wasser in Kontakt kommt.

Eine besonders gute Anpassung an die Kontur der Speichereinrichtung durch die Schutzhülle ist dann gegeben, wenn die Materialstärke der Schutzhülle zwischen 0,5 und 5 mm, insbesondere zwischen 1 und 3 mm liegt. Durch die Wahl der Materialstärke im angegebenen Bereich ist es möglich, eine ausreichende Festigkeit der Schutzhülle zur Verfügung zu stellen, andererseits können durch die Hülle hindurchtasten bspw. zum Lösen der Speichereinrichtung betätigt werden. Es ist bei einer derartigen Materialstärke möglich, dass kleinere konstruktive Änderungen am Gehäuse der Speichereinrichtung durch die Elastizität der Schutzhülle ausgeglichen werden können.

Besonders bevorzugt ist es, wenn die erfindungsgemäße Schutzhülle ohne ein Hilfsmittel von einem Anwender über die Speichereinrichtung gezogen werden kann.

Erfindungsgemäß ist vorgesehen, die Schutzhülle zum Schutz einer Speichereinrichtung vor dem Eindringen von Wasser, insbesondere Spritzwasser einzusetzen.

Neben dem Spritzwasserschutz ist auch ein Schutz gegen eindringenden Staub, der zu einer erhöhten Abnutzung der Kontakte und der Führungsschienen der Speichereinrichtung-Gehäuseverbindung führen kann, gewährleistet.

Für die Nutzung anderer Geräte kann die Schutzhülle auf der Speichereinrichtung verbleiben. Dadurch wird auch das Gehäuse der Speichereinrichtung gegen mechanische Beschädigung geschützt.

Die Erfindung soll nachfolgend anhand der Ausführungsbeispiele ohne Beschränkung hierauf beschrieben werden.

Es zeigen:
Fig. 1 eine dreidimensionale Ansicht einer ersten Ausführungsform einer erfindungsgemäßen Hüllen von der Einschubseite
Fig. 2 eine dreidimensionale Ansicht der ersten Ausführungsform einer Hülle von der Vorderseite gegenüberliegend zur Einschubseite
Fig. 3 ein Schnitt durch die erfindungsgemäße erste Ausführungsform einer Hülle
Fig. 4 eine detaillierte Ansicht eines Schnittes einer ersten Ausführungsform einer erfindungsgemäßen Hülle und anschließendem Gehäuse
Fig. 5 eine Ansicht wie Fig. 1 mit eingebaute Speichereinrichtung, insbesondere Batterie
Fig. 6 eine dreidimensionale Ansicht einer zweiten Ausführungsform einer erfindungsgemäßen Hülle, umfassend eine untere Schale und eine obere Schale in nicht zusammengebaute Form.
Fig. 7 eine dreidimensionale Ansicht gemäß Fig. 6 der zweiten Ausführungsform einer erfindungsgemäßen Hülle, mit unterer und oberer Schale in auseinandergebauter Form.
Fig. 8 dreidimensionale Ansicht gemäß Fig. 7 mit eingesetzter Speichereinrichtung.
Fig. 9 dreidimensionale Ansicht einer zweiten Ausführungsform einer erfindungsgemäßen Hülle, wobei die untere Schale für größere Bauformen von Speichereinrichtungen eine höhere Wandung aufweist.
Fig. 10a und 10b Verbindungsmechanismus für obere und untere Schale.

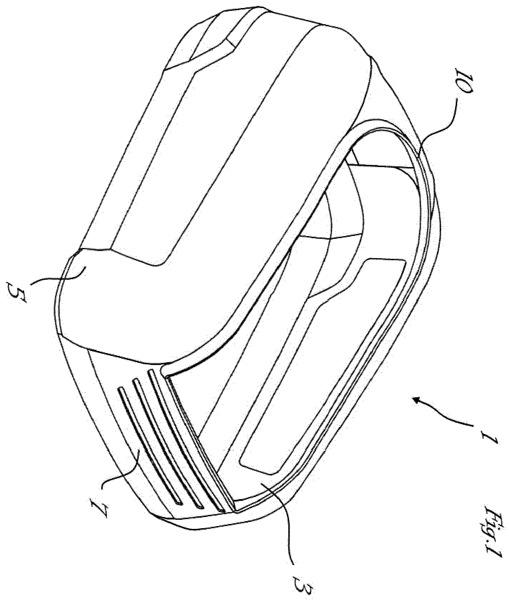

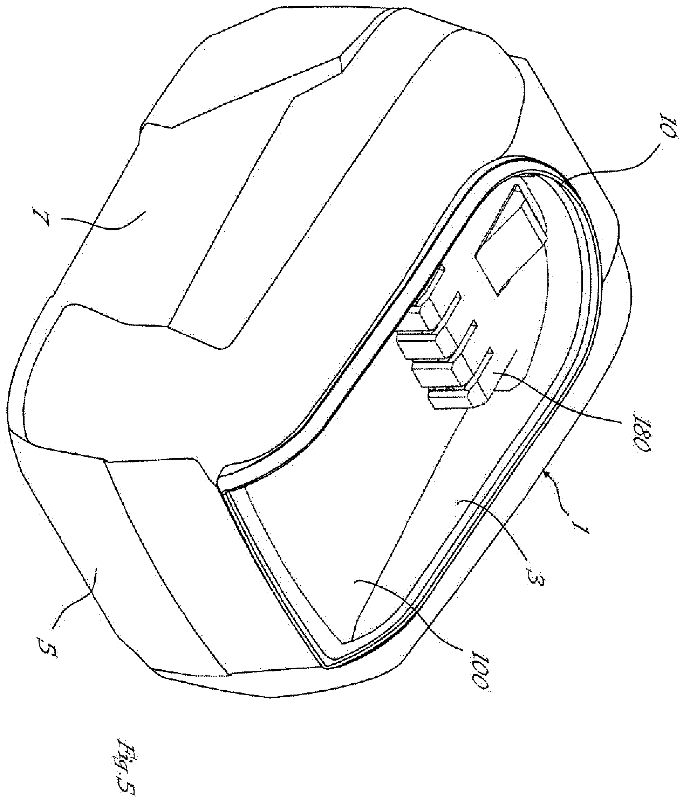

Fig. 1 zeigt eine dreidimensionale Ansicht einer erfindungsgemäßen Schutzhülle 1. Deutlich zu erkennen ist zum einen die Öffnung 3 in der Schutzhülle, zum Anschluss an eine Speichereinrichtung bzw. Aufnahme einer Speichereinrichtung, sowie die umlaufende Wand 7 der Schutzhülle bzw. der Überzug bestehend aus einem gummielastischen Material, bevorzugt Silikonkautschuk, die dicht an der in die Öffnung 3 eingesetzte Speichereinrichtung anliegt. Die Speichereinrichtung wird durch die Öffnung 3 in die Schutzhülle 1 eingesetzt und ist in Figur 5 dargestellt. Durch die Öffnung 3 kann die in die Schutzhülle 1 eingesetzte elektrische Speichereinrichtung mit einem elektrischen Gerät bspw. für Haus- und Gartenanwendungen elektrisch verbunden werden. Bezugsziffer 5 bezeichnet die Rückseite der Schutzhülle 1. Ebenfalls in Fig. 1 dargestellt, ist die um die Öffnung 3 umlaufende Dichtlippe 10, die die eingesetzte Speichereinrichtung dicht umschließt und aufgrund des dichten Umschlusses verhindert, das Wasser vom nicht dargestellten Gehäuse der elektrischen Einrichtung in die von der Schutzhülle geschützte und die Schutzhülle eingesetzte Speichereinrichtung eindringt. Die Lippe 10 ist bevorzugt flexibel ausgebildet und umfasst wie das Gehäuse selbst einen Silikonkautschuk als Material. Somit besteht die Lippe aus demselben Material wie die Schutzhülle 1. Die Speichereinrichtung mit Schutzhülle wird in das zu verborgende Gerät geschoben und rastet ein. Um dem Anwender diesen Vorgang zu erleichtern, sind drei Stege an der Einschubseite der Schutzhülle angebracht. Die Speichereinheit lässt sich dann besser mit dem Daumen oder dem Finger rutschfest führen. Auf der gegenüber liegenden Seite ist die Ausprägung für die Taste, die beim Drücken die Speichereinheit aus der Verrastung löst, angeformt. Ganz besonders bevorzugt ist es, wenn die Dichtlippe mit doppelt umlaufender Kante ausgebildet ist.

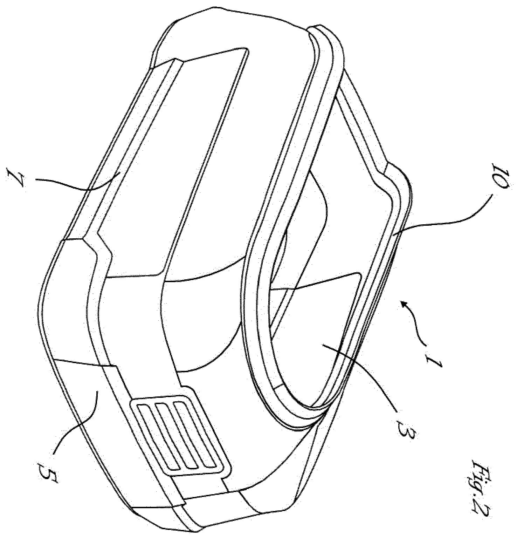

Fig. 2 ist die Vorderansicht einer erfindungsgemäßen Schutzhülle. Gleiche Bauteile wie in Figur 1 sind mit denselben Bezugsziffern belegt. Wie in Fig. 2 deutlich zu erkennen, umfasst die Schutzhülle 1 eine Öffnung 3 zur Anbindung der elektrischen Speichereinrichtung, die umlaufend von einer flexiblen Lippe 10 umgeben ist.

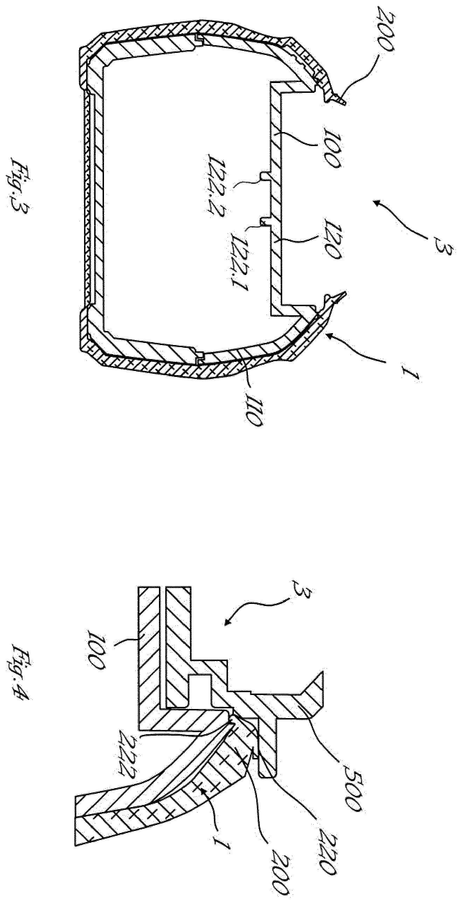

In Fig. 3 ist ein Schnitt durch eine flexible Schutzhülle 1 mit eingesetzter elektrischer Speichereinrichtung 100 gezeigt. Die Wände 110 der Speichereinrichtung 100 werden dicht von der erfindungsgemäßen Schutzhülle 1, insbesondere Ihren Wänden umschlossen. Der Bereich der Kontaktplatte 120, der elektrischen Speichereinrichtung, die die elektrische Verbindung zu einem elektrischen Gerät (nicht dargestellt) herstellt, mit zwei Rippen 122.1, 122.2 im Inneren der Speichereinrichtung 100, ist gegenüberliegend der Öffnung 3 der Schutzhülle angeordnet. Die elektrische Anbindung ist aber auch alternativ über ein an der Speichereinrichtung angeordnetes Anschlusselement wie in Fig. 5 dargestellt, möglich. Hierbei liegt das Anschlusselement ebenso wie die Kontaktplatte im Bereich der Öffnung 3 so, dass ein elektrischer Anschluss möglich ist, ohne die Speichereinrichtung aus der Schutzhülle entnommen werden muss. Die Schutzhülle 1 umfasst erfindungsgemäß eine Dichtlippe 200 am Rand der Öffnung. Die Dichtlippe ist wie in Fig. 1 und 2 dargestellt, umlaufend um die Öffnung 3 und mit doppelter Kante ausgeführt. Um die Speichereinheit aufladen zu können, wird diese zur Aufladung vom Gerät gelöst und bspw. in einer Ladeeinheit aufgeladen. Die Schutzhülle ist derart konstruiert, dass sie auch beim Ladevorgang auf der Speichereinheit bzw. Speichereinrichtung verbleiben kann. Bevorzugt ist die Dichtlippe wie die Schutzhülle aus einen gummielastischen Material, bevorzugt aus einem Silikonkautschuk. Die Materialstärke des die Speichereinrichtung umgebenden Materials der Schutzhülle beträgt 0,5 mm bis 5 mm, insbesondere 1 mm bis 3 mm. Durch die Auswahl dieser Stärke wird zum einen eine Schutzhülle mit ausreichender Festigkeit zur Verfügung gestellt, zum anderen eine Schutzhülle mit ausreichender Elastizität, so dass Tasten zum Lösen der Speichereinrichtung betätigt werden können. Besonders bevorzugt ist es, wenn das Material Schutzhülle und insbesondere der Dichtlippe ein gummielastisches Material, insbesondere ein Silikonkautschuk mit einer Shorehärte zwischen 40 und 80 Shore A ist. Ganz besonders bevorzugt beträgt die Shorehärte zwischen 45 und 55 Shore A und stellt damit zum einen eine hohe Flexibilität der Dichtlippe 200 bei ausreichender Formfestigkeit zur Abdichtung, zum in Figur 3 nicht dargestellten Gehäuse des Elektrogeräts, zur Verfügung.

Fig. 4 zeigt detailliert die Verbindung zwischen in die Schutzhülle 1 eingesetzter Speichereinrichtung 100 sowie dem an die Speichereinrichtung 100 angeschlossenen Gerät 500, bspw. für eine Verwendung im Haus und Garten. Das elektrische Gerät 500 ist elektrisch mit der elektrischen Speichereinrichtung 100 verbunden. Hierbei ist das elektrische Gerät 500 in die Öffnung 3 der Schutzhülle 1 eingesetzt. Deutliche zu erkennen ist die am Gehäuse des elektrischen Gerätes 500 anliegende Dichtlippe der Schutzhülle 1. Die Dichtlippe ist in Fig. 4 mit Bezugsziffer 200 gekennzeichnet. Die Dichtlippe dichtet sowohl nach oben zum Gehäuse des elektrischen Gerätes 500 wie auch nach unten zur Speichereinrichtung 100 ab. Die Abdichtung nach oben ist mit 220 bezeichnet, die Abdichtung nach unter zur Speichereinrichtung hin mit 222. Die Abdichtung nach oben und unten wird durch die doppelt umlaufende Kante zur Verfügung gestellt.

Wie aus Fig. 4 zu entnehmen, handelt es sich bei der Dichtlippe um eine Dichtlippe mit einer Kontur mit doppelt umlaufender Kante, die sich perfekt sowohl dem Gehäuse, sowie der Kontur des in die Schutzhülle eingesetzten Akkumulators, bzw. der elektrischen Speichereinrichtung 100, anpasst. Auf dieser Art und Weise wird ein hoher Schutz gegen das Eindringen von Wasser von außerhalb der Schutzhülle gewährleistet. Wie in Fig. 1 dargestellt kann die Schutzhülle sehr leicht über die Speichereinrichtung gezogen werden.

In Figur 5 ist die Schutzhülle 1 wie in Fig. 1 dargestellt, mit in die Öffnung 3 eingesetzte Speichereinrichtung 100 dargestellt. Gleiche Bauteile wie in Fig. 1 sind mit denselben Bezugsziffern belegt. In Fig. 5 deutlich zu erkennen ist, die dichte Umschließung der über die Öffnung 3 in die Schutzhülle 1 eingesetzten elektrischen Speichereinrichtung 100. In Fig. 5 dargestellt, ist auch der elektrische Anschluss 180 der elektrischen Speichereinrichtung 100 mit der die Speichereinrichtung elektrisch z.B. mit einem Gerät oder beispielsweise einer Ladestation zum Aufladen der Speichereinrichtung verbunden werden kann. Wie aus Fig. 5 zu entnehmen ist, kann die Speichereinrichtung 100, ohne dass die Einrichtung aus der Schutzhülle 1 entnommen werden muss, z.B. mit einer Ladeeinrichtung elektrisch verbunden werden.

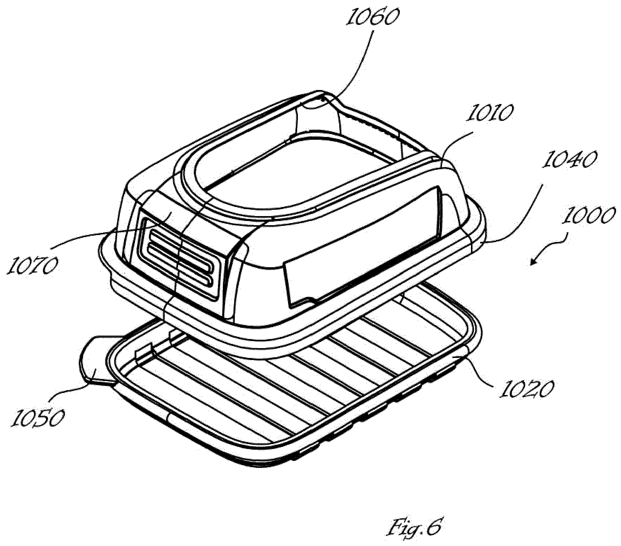

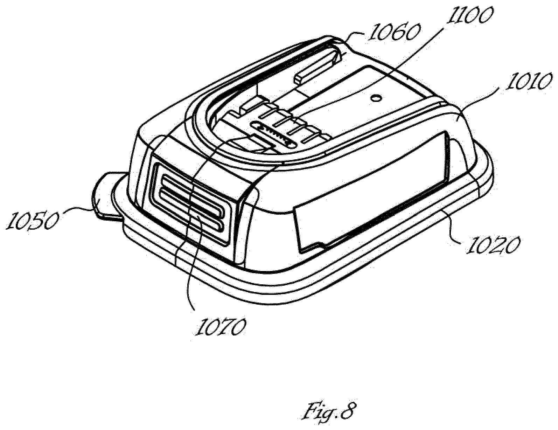

In Fig. 6 ist in einer dreidimensionalen Ansicht eine alternative zweite Ausführungsform der Erfindung gezeigt. Bei der Ausführungsform in Figur 6 handelt es sich um eine zweiteilige Schutzhülle 1000, die eine obere Schale 1010 und eine untere Schale 1020 umfasst. Die obere Schale 1010 besteht aus einem formstabilen Kunststoff (z. B. ABS - Acrylnitril-Butadien-Styrol-Copolymer), der der Kontur der Speichereinrichtung bzw. Batterie angepasst ist. Die untere Schale 1020, hier als Deckel bezeichnet, ist aus einem weicheren Kunststoff (z.B. PP, PE - Polypropylen, Polyethylen) und wurde nach Einlegen der Speichereinrichtung in die obere Schale 1010 durch Einrasten in eine dafür vorgesehene Nut 1040 der oberen Schale 1010 in einem Wulst 1030 der unteren Schale 1020 fest verbunden. Die Verbindungsstelle ist dicht gegen eindringende Feuchtigkeit ausgelegt. Geöffnet wird das zweischalige Gehäuse durch Druck mit dem Daumen oder Finger auf eine Lasche 1050. Hierdurch wird der Deckel bzw. die untere Schale aus der umlaufenden Nut 1040 der oberen Schale 1010 herausgedrückt. Die Abdichtung zum Arbeitsgerät bzw. der in die Schutzhülle eingesetzten Speichereinrichtung bzw. Batterie erfolgt durch eine an der Oberschale angespritzte umlaufende flexible Kante 1060. Da die Oberschale aus einem verwindungssteifen Material besteht, ist eine Abdichtung durch die umlaufende Kante bzw. Dichtlippe 1060 immer gewährleistet. Um die Speichereinrichtung aus dem Bearbeitungsgerät entfernen zu können, ist der Bereich 1070 der Oberschale mit einem flexiblen, gummielastischen Material (z.B TPE, TPU) ausgekleidet. Dieses flexible, gummielastische Material in Form eines Drucktastenmaterials 1070 wird analog zur umlaufenden Dichtlippe bzw. der flexiblen Kante 1060 bzw. obere Schale 1010 beim Fertigungsprozess in die Hartschale eingespritzt, so dass eine feste Verbindung zwischen den unterschiedlichen Materialien erzeugt wird. Mit dem flexiblen gummielastischen Material in der oberen Schale 1010 kann insbesondere eine Entriegelungstaste für eine, wie in Fig. 8 gezeigt, in die obere Schale 1010 eingelegte Speichereinrichtung 1100 ausgebildet werden.

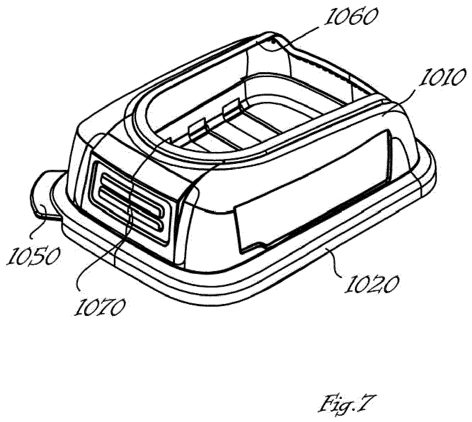

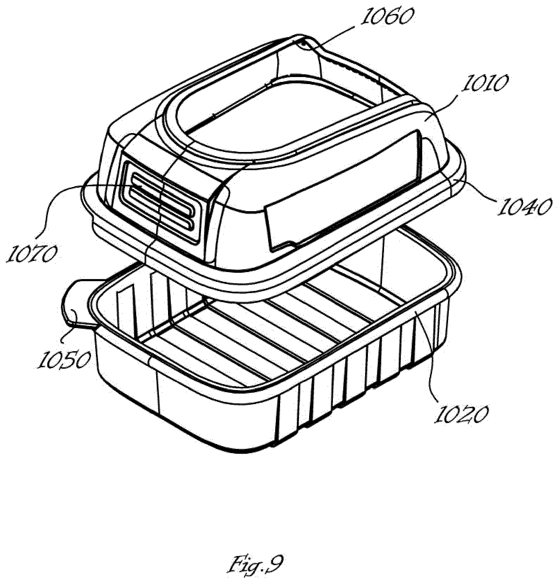

Fig. 7 zeigt das Gehäuse aus oberer 1010 und unterer Schale 1020 nicht in geöffnetem, sondern im geschlossenen Zustand. Gleiche Bauteile wie in Figur 6 sind mit denselben Bezugsziffern gekennzeichnet. Das Gehäuse mit eingelegter Speichereinrichtung 1100 ist in Fig. 8 abgebildet. Die Speichereinrichtung 1100 ist in die obere Schale 1010 eingelegt. In der Regel wird die Speichereinrichtung 1100 in die obere Schale verriegelt. Um die Speichereinrichtung 1100 aus der oberen Schale 1010 entnehmen zu können, kann die Speichereinrichtung 1100 entriegelt werden. Dies kann durch Drücken der Entriegelungstaste 1070, die aus einem flexiblen, gummielastischen Material besteht, erfolgen. Für eine größere Bauform des Akkus ist der Deckel mit einer höheren Wandung versehen wie in Fig. 9 gezeigt. Das Verschließen und Öffnen des Gehäuses erfolgt analog. Gleiche Bauteile wie in Figur 6 bis 8 sind mit denselben Bezugsziffern belegt.

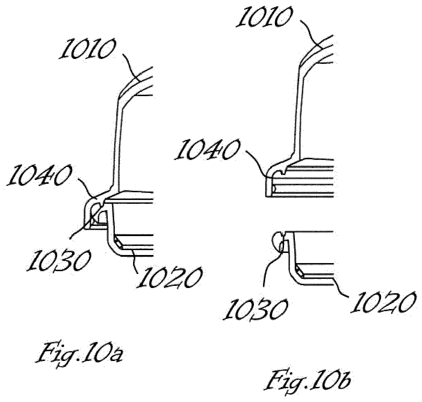

Der Verbindungsmechanismus von oberer 1010 und unterer Schale 1020 ist in Fig. 10a (geschlossen) und Fig. 10b (offen) detailliert dargestellt. Dabei wird die umlaufende Wulst 1030 in die Nut 1040 der oberen Schale hineingedrückt und festgeklemmt. Das zweiteilige Gehäuse kann so auf einfache Weise ohne Werkzeug geöffnet und geschlossen werden.

Mit der Erfindung wird erstmals eine Schutzhülle für eine Speichereinrichtung, insbesondere ein Akkumulator angegeben, der zuverlässig das Eindringen von Spritzwassern verhindert und an unterschiedliche Konturen von Speichereinrichtungen sehr leicht angepasst werden kann.

Bei der erfindungsgemäßen Schutzhülle handelt es sich um einen homogenen, elastischen Körper im Gegensatz zum Stand der Technik der eine Hülle aus zwei festen Halbschalen zeigt.

Obwohl in der Erfindung eine Schutzhülle aus einem homogenen elektrischen Körper gezeigt ist, wird von der Erfindung auch die Ausgestaltung einer Schutzhülle mit einer festen Schale, in die die Speichereinheit eingelegt wird und einem Gegenstück zur Schale zum Verschließen der Hülle aus einem elastischen Material gemäß der Erfindung umfasst. Die Schale ist dann aus festem Kunststoff, z.B. ABS, PP, PVC oder PC. Die Dichtlippe ist Teil des elastischen Materials und analog ausgebildet, wie im Fall der homogenen elastischen Schutzhülle.

Die Erfindung umfasst Aspekte, die in den nachfolgenden Sätzen niedergelegt sind, die Teil der Beschreibung sind und keine Ansprüche in Übereinstimmung mit J15/88 der Beschwerdekammer.

### Sätze

1. Schutzhülle (1) für eine elektrische Speichereinrichtung (100), insbesondere einen Akkumulator mit einem Überzug bzw. einer umlaufenden Wand (7), der die elektrische Speichereinrichtung (100), insbesondere den Akkumulator umschließt
   dadurch gekennzeichnet, dass
   der Überzug bzw. die umlaufende Wand (7) aus einem gummielastischen, insbesondere einem transparenten gummielastischen Material besteht und eine Dichtlippe (10, 200), insbesondere eine flexible Dichtlippe, umfasst.
2. Schutzhülle nach Satz 1,
   dadurch gekennzeichnet, dass
   das gummielastische Material eines der nachfolgenden Materialien ist:
   - Naturkautschuk
   - elastischer Thermoplast
   - Silikonkautschuk
3. Schutzhülle nach einem der Sätze 1 bis 2,
   dadurch gekennzeichnet, dass
   das gummielastische Material einen Härtegrad zwischen und 80 Shore A, insbesondere 45 und 55 Shore A umfasst.
4. Schutzhülle nach einem der Sätze 1 bis 3,
   dadurch gekennzeichnet, dass
   die Dichtlippe (10, 200), insbesondere die flexible Dichtlippe, eine Kontur mit doppelt umlaufender Kante (210, 220) umfasst.
5. Schutzhülle nach einem der Sätze 1 bis 4,
   dadurch gekennzeichnet, dass
   der Überzug bzw. die umlaufende Wand (7) einer Öffnung (3) aufweist.
6. Schutzhülle nach einem der Sätze 1 bis 5,
   dadurch gekennzeichnet, dass im Bereich
   der Öffnung (3) eine Kontaktplatte oder Anschlusselement (180) als Anbindung der elektrischen Speichereinrichtung (100) an andere elektrische Einrichtungen, insbesondere eine Ladestation oder ein elektrisches Gerät vorgesehen ist.
7. Schutzhülle nach einem der Sätze 1 bis 6,
   dadurch gekennzeichnet, dass
   die Schutzhülle (1) der Kontur der Speichereinrichtung (100) angepasst ist und/oder die Speichereinrichtung (100) eng anliegend umschließt.
8. Schutzhülle nach einem der Sätze 1 bis 7,
   dadurch gekennzeichnet, dass
   die Stärke des gummielastischen Materials, 1,5 bis 5 mm, bevorzugt 1 bis 3 mm beträgt.
9. Schutzhülle nach einem der Sätze 1 bis 8,
   dadurch gekennzeichnet, dass
   die Schutzhülle (1) derart ausgebildet ist, dass sie ohne Hilfsmittel über die Speichereinrichtung (100) gezogen werden kann.
10. Verwendung einer Schutzhülle nach einem der Sätze 1 bis 9 zum Schutz der Speichereinrichtung (100) vor einem Eindringen von Wasser, insbesondere Spritzwasser.

## Patentansprüche

1. Schutzhülle (1) für eine elektrische Speichereinrichtung (100), insbesondere einen Akkumulator mit einem Überzug bzw. einer umlaufenden Wand (7), der die elektrische Speichereinrichtung (100), insbesondere den Akkumulator umschließt
**dadurch gekennzeichnet, dass**
der Überzug bzw. die umlaufende Wand (7) bevorzugt einstückig, aus einem gummielastischen, insbesondere einem transparenten gummielastischen Material besteht und eine Dichtlippe (10, 200), insbesondere eine flexible Dichtlippe, umfasst.

2. Schutzhülle nach Anspruch 1,
**dadurch gekennzeichnet, dass**
das gummielastische Material eines der nachfolgenden Materialien ist:
- Naturkautschuk
- elastischer Thermoplast
- Silikonkautschuk

3. Schutzhülle nach einem der Ansprüche 1 bis 2,
**dadurch gekennzeichnet, dass**
das gummielastische Material einen Härtegrad zwischen und 80 Shore A, insbesondere 45 und 55 Shore A umfasst.

4. Schutzhülle nach einem der Ansprüche 1 bis 3,
**dadurch gekennzeichnet, dass**
die Dichtlippe (10, 200), insbesondere die flexible Dichtlippe, eine Kontur mit doppelt umlaufender Kante (210, 220) umfasst.

5. Schutzhülle nach einem der Ansprüche 1 bis 4,
**dadurch gekennzeichnet, dass**
der Überzug bzw. die umlaufende Wand (7) einer Öffnung (3) aufweist.

6. Schutzhülle nach einem der Ansprüche 1 bis 5,
**dadurch gekennzeichnet, dass** im Bereich
der Öffnung (3) eine Kontaktplatte oder Anschlusselement (180) als Anbindung der elektrischen Speichereinrichtung (100) an andere elektrische Einrichtungen, insbesondere eine Ladestation oder ein elektrisches Gerät vorgesehen ist.

7. Schutzhülle nach einem der Ansprüche 1 bis 6,
**dadurch gekennzeichnet, dass**
die Stärke des gummielastischen Materials, 1,5 bis 5 mm, bevorzugt 1 bis 3 mm beträgt.

8. Schutzhülle (1000) für eine elektrische Speichereinrichtung (100), insbesondere einen Akkumulator mit einem Überzug bzw. einer umlaufenden Wand (7), der die elektrische Speichereinrichtung (100), insbesondere den Akkumulator umschließt,
**dadurch gekennzeichnet, dass**
die Schutzhülle wenigstens zweistückig ausgebildet ist, umfassend eine obere Schutzhülle, insbesondere eine obere Schale und eine untere Schutzhülle, insbesondere eine untere Schale.

9. Schutzhülle nach Anspruch 8,
**dadurch gekennzeichnet, dass**
die obere Schutzhülle, insbesondere die obere Schale einen formstabilen Kunststoff, insbesondere Acrylnitril-Butadien-Styrol-Copolymer (ABS) ist und die untere Schutzhülle, insbesondere die untere Schale, bevorzugt der Deckel aus einem weicheren Kunststoff, insbesondere Polypropylen (PP), Polyethylen (PE) besteht.

10. Schutzhülle nach einem der Ansprüche 8 bis 9,
**dadurch gekennzeichnet, dass**
die obere Schutzhülle, insbesondere Schale, bevorzugt eine umlaufende Nut und durch die untere Schale einen umlaufenden Wulst umfasst, der in die Nur einrastet.

11. Schutzhülle nach einem der Ansprüche 8 bis 10,
**dadurch gekennzeichnet, dass**
die obere Schutzhülle, insbesondere obere Schale eine umlaufende, flexible Kante umfasst.

12. Schutzhülle nach einem der Ansprüche 8 bis 11,
**dadurch gekennzeichnet, dass**
die obere Schutzhülle, insbesondere obere Schale einen Bereich, insbesondere eine Entriegelungstaste bevorzugt für die Speichereinrichtung, insbesondere aus einem flexiblen, elastischen Material umfasst.

13. Schutzhülle nach einem der Ansprüche 1 bis 12
**dadurch gekennzeichnet, dass**
die Schutzhülle (1) und/oder die Oberschale der Kontur der Speichereinrichtung (100) angepasst ist und/oder die Speichereinrichtung (100) eng anliegend umschließt.

14. Schutzhülle nach einem der Ansprüche 1 bis 13,
**dadurch gekennzeichnet, dass**
die Schutzhülle (1) derart ausgebildet ist, dass sie ohne Hilfsmittel über die Speichereinrichtung (100) gezogen werden kann.

15. Verwendung einer Schutzhülle nach einem der Ansprüche 1 bis 14 zum Schutz der Speichereinrichtung (100) vor einem Eindringen von Wasser, insbesondere Spritzwasser.
